# EUROPÄISCHE PATENTSCHRIFT

(11) **EP 0 759 150 B1**
(45) Veröffentlichungstag und Bekanntmachung des Hinweises auf die Patenterteilung: **16.08.2001**
(21) Anmeldenummer: 96904865.1
(22) Anmeldetag: 29.02.1996
(51) Int. Cl.: G01C 7/04

(54) **VERFAHREN UND VORRICHTUNG ZUM VERMESSEN VON KONTUREN**
CONTOUR MEASUREMENT PROCESS AND DEVICE
PROCEDE ET DISPOSITIF DE MESURAGE DE CONTOURS

(30) Priorität: 08.03.1995 DE 19508264
(43) Veröffentlichungstag der Anmeldung: 26.02.1997
(73) Patentinhaber: Klose, Werner, 87480 Weitnau (DE); Sterzik, Michael, 81549 München (DE)
(72) Erfinder: Klose, Werner, 87480 Weitnau (DE); Sterzik, Michael, 81549 München (DE)
(74) Vertreter: von Hellfeld, Axel, Dr. Dipl.-Phys.
(86) Internationale Anmeldenummer: EP9600831
(87) Internationale Veröffentlichungsnummer: WO9627779

(56) Entgegenhaltungen:
- WO-A-92/10720
- DE-A- 4 036 424
- DE-A- 4 115 809
- US-A- 3 983 746
- US-A- 5 107 598

## Beschreibung

Die Erfindung betrifft ein Verfahren und eine Vorrichtung zum Vermessen von Konturen nach dem Oberbegriff des Anspruchs 1.
Die Erfindung betrifft ferner eine Vorrichtung zur Durchführung des Verfahrens.
Das erfindungsgemäße Meßverfahren bzw. die erfindungsgemäße Meßeinrichtung eignet sich insbesondere zur Vermessung des Straßenverlaufs und von Unfallstellen. Selbstverständlich können auch andere Geländeabschnitte mit diesem Verfahren vermessen und dargestellt werden. Andere denkbare Anwendungsgebiete dieses Verfahrens bestehen z.B. darin, Einmessungen von Plänen am Schreibtisch vorzunehmen. Auch Anwendungen des Verfahrens im Bereich des Hoch- und Tiefbaus sind vorstellbar (z.B. Grundrißvermessung).

Bei der Vermessung von Geländekonturen, z.B. bei der Unfallanalytik, ist es Stand der Technik, Entfernungen zwischen Meßpunkten mittels einfacher Meßräder einzumessen und die für die Analyse des Geschehens notwendigen Straßenverläufe und relevanten Spuren dann durch zeitaufwendige Arbeit im Büro maßstabsgetreu in einem Plan zu erstellen. Eine weitere Methode stellen die Mittel der Fotogrammetrie dar, die jedoch sehr selten angewandt werden, da die dafür notwendigen Aufnahme- und Auswertegeräte mit einem sehr hohen Anschaffungspreis verbunden sind.

In der DE 39 25 133 C1 ist erstmalig ein Meßverfahren zur Aufzeichnung von Konturen beschrieben, bei der die ausgeführten Bewegungen über einen Rechner ausgewertet werden.
Dabei wird eine Kugel entlang der zu vermessenden Kontur abgerollt und die von der Kugel ausgeführten Bewegungen erfaßt. Bezüglich Einzelheiten dieses Verfahrens wird auf die oben angegebene Patentschrift verwiesen.

Dieses Verfahren ist insbesondere für die Vermessung von Geländekonturen geeignet.

Bei der Vorrichtung nach der DE 39 25 133 C1 wird die abzurollende Kugel in ihrem Käfig von zwei Kugelkränzen gelagert.

### Dabei ergeben sich folgende Nachteile:

Die Lagerung der Kugel in einem Kugelkranz mit mehr als drei Auflagepunkten stellt ein statisch unbestimmtes System dar, das einen sehr hohen Präzisionsgrad und fertigungstechnischen Aufwand erfordert. Mögliche Verschmutzungsprobleme können nur mit sehr hohem technischen Aufwand beseitigt werden.

In der DE 40 36 424 A1 und der Zusatzanmeldung DE 41 15 809 A1, ist ein Meßverfahren und eine zugehörige Vorrichtung beschrieben, bei der die Konturen durch zwei nebeneinander angebrachte, unabhängig voneinander drehbare Meßräder abgefahren werden und durch inkrementale Drehgeber die Drehwinkel der Räder erfaßt und durch entsprechende Auswertung die abgefahrene Kontur ermittelt werden kann.

Bei der DE 40 36 424 A1 und dem Zusatz DE 41 15 809 A1 wird die abgefahrene Kontur durch die Auswertung der gemessenen Drehwinkel beider Räder erfaßt.

### Dabei ergibt sich folgender Nachteil:

Insbesondere bei der Vermessung von Unfallstellen und Straßen, findet man immer wieder Fahrbahnbeläge vor, die uneben oder durch Splitterfelder und andere auf der Fahrbahn befindliche Gegenstände (Kieselsteine) verschmutzt sind.
Beim Überfahren dieser Gegenstände erhält das entsprechende Rad mehr Drehwinkelimpulse und durch die trigonometrische Auswertung wird dem Meßsystem damit unbeabsichtigterweise eine Richtungsänderung mitgeteilt, die schon beim Abfahren relativ kurzer Strecken zu unkontrollierbaren Meßfehlern führt.

Aus der WO92/10720 ist eine Vorrichtung zur Straßenvermessung bekannt, die aus einem vierrädrigen Wagen besteht, wobei an einem der Hinterräder ein Bewegungserfassungsgerät angebracht ist, mit dem die Absolute abgefahrene Weglänge ermittelt werden kann. Ferner weist der Wagen einen Kreiselkompaß zur Erfassung der Winkelgeschwindigkeit sowie zwei Neigungssensoren auf, mit denen die Neigung des Wagens nach vorne und zur Seite gemessen werden kann.

Aus der DE 275507 ist ein Verfahren zur geodätischen Vermessung unter Verwendung eines Trägheitsvermessungssystems bekannt, mit dem bei der Messung der "Ablenkung der Vertikalen" Trägheitssystemfehler vermieden werden sollen, wobei mit diesem System jedoch keine Konturenvermessung vorgenommen werden kann.

In dem US-Patent NR: 5174038 wird zur Profilmessung von Oberflächen ein Meßwagen mit angehängtem Kreisel vorgestellt, bei dem durch das Kreiselsystem aber nur die Neigung gegenüber der Vertikalen festgestellt wird. Auch dieses System ist nicht für Vermessungen von Konturen im Sinne der Erfindung geeignet.

Der Erfindung lag deshalb die Aufgabe zugrunde, ein Meßsystem zu entwickeln, das preisgünstiger, konstruktiv einfacher, den Zielanforderungen an ein Meßsystem gemäß De 39 25 133 C1 gerechnet wird, schmutzunempfindlich ist und bei dem das Überfahren von kleinen auf der Fahrbahn befindlichen Gegenständen keine Richtungsänderung für die gesamte Messung nach sich zieht.

Gelöst wurde diese Aufgabe dadurch, daß die interessierenden Konturen der zu vermessenden Flächen bzw. Linien mit einem einzigen Aufnehmerrad abgefahren werden, das kontinuierlich die zurückgelegte absolute Weglänge erfaßt und dessen absolute Richtungsänderung kontinuierlich von zumindest einem Richtungssensor gemessen wird, und wobei in Fahrtrichtung hinter dem Aufnehmerrad zwei Stützelemente angeordnet sind, wobei die Aufstandspunkte von Aufnehmerrad und den beiden Stützelementen eine Ebene definieren, deren Neigung gegenüber der Horizontalen kontinuierlich mit einem Neigungssensor erfaßt wird, und wobei die gemessenen Daten elektronisch registriert werden.

Zur Durchführung dieses Verfahrens umfaßt die erfindungsgemäße Meßeinrichtung ein einziges Aufnehmerrad mit zugeordnetem Bewegungserfassungsgerät zur kontinuierlichen Ermittlung der absoluten abgefahrenen Weglänge und einem Richtungssensor, mit dem die absolute Richtungsänderung des Aufnehmerrades kontinuierlich erfaßbar ist, wobei in Fahrtrichtung hinter dem Aufnehmerrad zwei Stützelemente angeordnet sind, und die Aufstandspunkte von Aufnehmerrad und den beiden Stützelementen eine Ebene definieren, und wobei die Meßeinrichtung einen Neigungssensor aufweist, mit dem die Neigung dieser Ebene gegenüber der Horizontalen erfaßt werden kann.

Somit kann die Bewegung der Meßeinrichtungen und damit auch eine Kontur im dreidimensionalen Raum bestimmt werden.

Die Patentansprüche 2 bis 9 stellen bevorzugte Ausgestaltungen dieses Verfahrens dar. Die Patentansprüche 11 bis 15 beinhalten bevorzugte Ausgestaltungen der Meßeinrichtung nach Anspruch 10.

Die Meßeinrichtung kann an beliebige tragbare oder stationäre Rechner angeschlossen werden. Es ist auch denkbar, die Meßeinrichtung nur mit einem geeigneten Anzeigeinstrument auszustatten (z.B. zur Flächen- oder Volumenanzeige). Der Anschluß des Bewegungserfassungsgerätes des Aufnehmerrades und des Richtungssensor an den Rechner kann über Kabelverbindungen oder über kabellose Signalübertragung (z.B.: durch Funksignale oder Infrarot-Verbindungen) erfolgen. Letzteres wird insbesondere beim Anschluß an stationäre Rechner bevorzugt. Gemäß einer Ausgestaltung der Erfindung ist der Rechner direkt an der Meßeinrichtung angeordnet (Anspruch 12).

Gemäß einer weiteren Ausführungsform (Anspruch 13) enthält die Meßeinrichtung einen Monitor zur Überwachung des Meßverlaufs. Hierdurch ist es möglich, die abgefahrene Wegstrecke am Monitor als Konturlinie sichtbar zu machen. Damit ist gleichzeitig eine direkte Kontrolle der Messung gewährleistet.
Eine kartographische Auswertung der aufgenommenen Meßdaten ist ebenfalls vorstellbar.

Gemäß einer weiteren Anwendungsform ist es ebenfalls möglich, eine gespeicherte und vorgegebene Konturlinie mit einer Meßeinrichtung gemäß dem erfindungsgemäßen Verfahren abzufahren.

Die Drehbewegung des Rades kann mit beliebigen Bewegungserfassungsgeräten erfaßt werden.
Unter Bewegungserfassungsgerät im Sinne der Erfindung werden alle Einrichtungen verstanden, die in der Lage sind, die Drehbewegung des Rades quantitativ zu erfassen. Denkbar ist ein Bewegungserfassungsgerät, das nach optoelektronischen, elektrischen, mechanischen oder magnetischen Prinzipien funktioniert.

Die Stützelemente können (unabhängig voneinander) rollbar sein.

Die Größe des Rades wird von dem beabsichtigten Verwendungszweck und der Geländebeschaffenheit abhängig sein.
Die Größe des Rades ist so zu bemessen, daß ein sicheres Abrollen der Geländekontur gewährleistet ist. Für die Einmessung von Plänen direkt am Schreibtisch muß das Rad selbstverständlich einen kleineren Durchmesser aufweisen als das Rad einer Meßeinrichtung, die für Vermessungen auf relativ weichem oder unebenen Untergrund (z.B. Wiese) vorgesehen ist.

Die Information über die relative Richtungsänderung des Meßrades im Raum kann beliebig ermittelt werden. Unter Richtungssensoren im Sinne der Erfindung werden alle Einrichtungen verstanden, die in der Lage sind, die Richtungsänderung des Meßrades quantitativ zu erfassen. Beispielsweise ist es möglich, daß die Richtungsinformationen durch einen Sensor ermittelt werden, der sich an einem elektromagnetischen Feld orientiert. Dieses elektromagnetische Feld kann ein absolutes Richtungsbezugssystem definieren (z.B.: Erdmagnetfeld, Satellitenortung oder andere Navigationssysteme).
Je nach Anwendungsfall kann es zweckmäßig ein relatives Richtungssystem darstellen, in dem relative Richtungsänderungen registriert werden können (z.B.: Erzeugung eines lokalen elektromagnetischen Feldes, das eine Auswertung einer relativen Richtungsänderung erlaubt).

Es ist auch denkbar, daß die relative Abnahme der Richtungsänderung über einen Kreiselkompass erfolgt.

Bei Verwendung eines Richtungssensors, dessen Funktion neigungsabhängig gegenüber der Horizontalen ist, ist es auch denkbar zusätzlich einen Neigungssensor an der Meßeinrichtung anzubringen, dessen Information über den aktuellen Neigungswinkel der Meßeinrichtung für eine mögliche Korrektur der Richtungssignale dient.

Die von dem Bewegungserfassungsgerät und dem Richtungsänderungserfassungsgerät registrierten Daten werden an einen Computer weitergeleitet, dort elektronisch verarbeitet und gespeichert. Dieser Computer kann tragbar ausgeführt sein, er kann aber auch direkt an der Meßeinrichtung angeordnet sein. Er kann selbstverständlich auch stationär aufgestellt sein.

Die mit der Erfindung erzielten Vorteile bestehen insbesondere darin, daß die Lagerung eines einzigen Aufnahmerades aus fertigungstechnischer Sicht kein Problem darstellt, konstruktiv einfach und damit erheblich kostengünstiger ist, als das notwendige Lagerungssystem der DE 39 25 133 C1. Ein weiterer Vorteil besteht darin, daß die Geländekonturen mit einem ausreichend großen Rad abgefahren werden, kein Verschmutzungsproblem entsteht, unkontrollierbare Meßfehler wie bei der DE 40 36 424 A1 und dem Zusatz DE 41 15 809 A1 vermieden werden und, genau wie bei herkömmlichen Meßrädern, die absolute Wegstrecke erfaßt und durch die im Raum orientierten Richtungs- bzw. Neigungserfassungsgeräte jede Änderung der Bewegungsrichtung unabhängig von der Beschaffenheit der Vermessungsoberfläche erfaßt wird.

Die Erfindung wird nachstehend anhand eines Ausführungsbeispiels näher erläutert.
- Fig. 1: zeigt die Frontansicht der Meßeinrichtung gemäß der Erfindung
- Fig. 2: zeigt die Seitenansicht gemäß der Erfindung

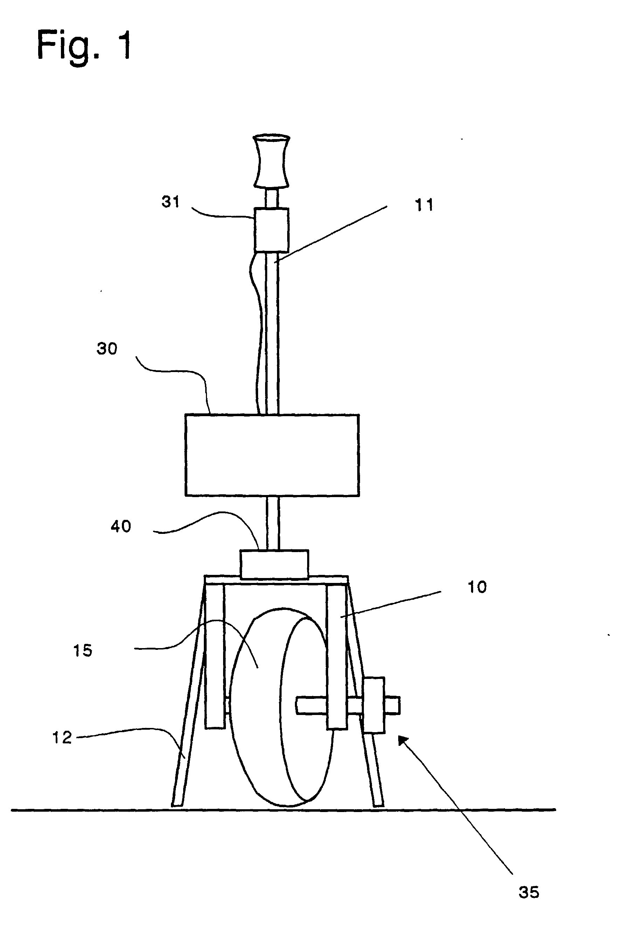

Fig. 1 zeigt das Gestell (10) der Meßeinrichtung, das für die Aufnahme des Rades (15) dient. An dem Gestell befindet sich ein Stützarm (12), bestehend aus zwei Stützelementen, der das Abstellen des Meßrades ermöglicht. An dem Gestell ist ein tragbarer Notebook-Computer (30) angebracht, der durch die am Führungsstab (11) befindliche Schaltereinheit (31) bedient werden kann. Die zur Verarbeitung notwendigen Daten werden von dem Bewegungserfassungsgerät (35) und dem Richtungssensor (40) an den Computer (30) weitergeleitet.

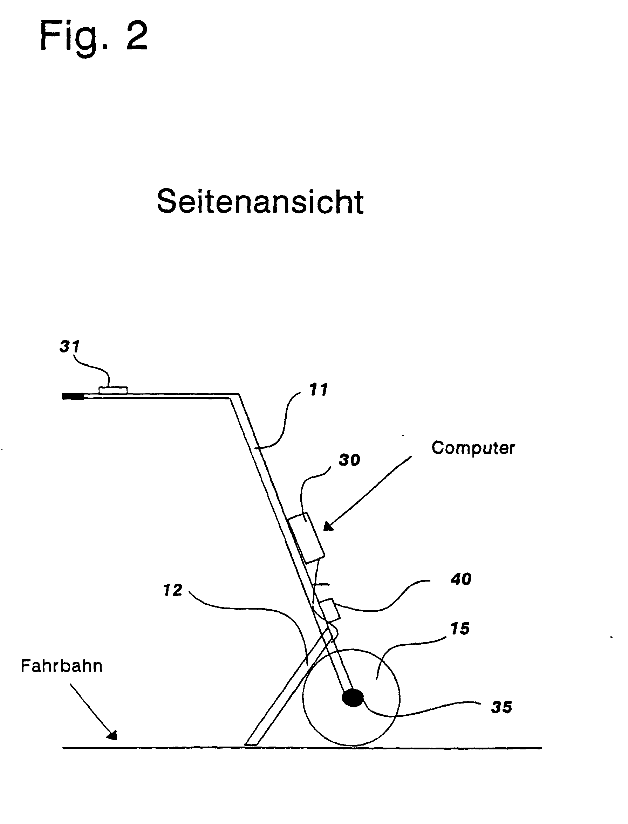

Fig. 2 zeigt das Gestell der Meßeinrichtung von der Seite. Gut erkennbar ist der am Gestell angebrachte Führungsstab (11) und der Stützarm (12), der bei einem Vermessungsstop, also Stillstand des Rades (15), den freien Stand der Meßeinrichtung ermöglicht.

### Die Vorrichtung funktioniert nun folgendermaßen:

Beim Abfahren einer zu vermessenden Kontur werden die vom Rad (15) erzeugten Drehbewegungen, die ein Maß für die zurückgelegte absolute Wegstrecke darstellen, durch das Bewegungserfassungsgerät (35), und die von dem Richtungssensor (40) erzeugten Richtungsänderungssignale, die ein Maß für die absolute Richtungsänderung darstellen, an den Computer (30) weitergegeben, dort verarbeitet und gespeichert.

Da der Radius des Rades (15) bekannt ist, kann das im Computer (30) befindliche Programm nach Übermittlung dieser Daten und der gleichzeitigen Übermittlung der Richtungsänderungssignale, durch genügend kurze Abfrage diese Daten quantitativ auswerten.

Durch genügend kurze Abfrage der Drehbewegungs- und der Richtungsänderungssignale, erscheint die mit dem Meßrad abgefahrene Kontur als Linie auf dem Bildschirm, die vom Computer gespeichert wird und beliebig weiterverarbeitet werden kann.

Durch einen am Schaltgehäuse (31) angebrachten Schalter kann der Benutzer wahlweise festlegen, ob die von ihm abgefahrene Kontur nur registriert oder aber auch dargestellt werden soll, was gerade bei der Registrierung von Mittelstreifen notwendig ist.

## Patentansprüche

1. Verfahren zur Vermessung und maßstabsgetreuen Darstellung von Konturen, insbesondere des Straßenverlaufs, bei dem Konturen der zu vermessenden Flächen bzw. Linien mit einem einzigen Aufnehmerrad (15) abgefahren werden, das kontinuierlich die zurückgelegte absolute Weglänge erfaßt und dessen absolute Richtungsänderung kontinuierlich von zumindest einem Richtungssensor (40) gemessen wird, wobei in Fahrtrichtung hinter dem Aufnehmerrad (15) zwei Stützelemente (12) angeordnet sind, wobei die Aufstandspunkte von Aufnehmerrad (15) und den beiden Stützelementen (12) eine Ebene definieren, deren Neigung gegenüber der Horizontalen kontinuierlich mit einem Neigungssensor erfaßt wird, und wobei die gemessenen Daten elektronisch registriert werden.

2. Verfahren nach Anspruch 1,
bei dem die erfaßten Daten der Weglängen und Richtungsänderungen an einen Computer (30) zu deren Verarbeitung weitergegeben werden.

3. Verfahren nach Anspruch 2,
bei dem die ermittelten Konturen während des Meßverlaufes auf einem an der Meßeinrichtung befindlichen Monitor dargestellt werden.

4. Verfahren nach einem der Ansprüche 1 bis 3,
bei dem die Drehbewegung des Aufnehmerrads (15) mechanisch erfaßt wird.

5. Verfahren nach einem der Ansprüche 1 bis 3,
bei dem die Drehbewegung des Aufnehmerrads (15) elektronisch ermittelt wird.

6. Verfahren nach einem der Ansprüche 1 bis 3,
bei dem die Richtungsänderung des Aufnehmerrads (15) durch einen Richtungssensor (40) erfaßt wird, der sich an elektromagnetischen Feldern orientiert.

7. Verfahren nach einem der Ansprüche 1 bis 3,
bei dem die absolute Richtungsänderung des Aufnehmerrads (15) durch einen Richtungssensor (40) erfaßt wird, der die Information über die absolute Orientierung im Raum durch ein absolutes Richtungsbezugssystem erhält.

8. Verfahren nach einem der Ansprüche 1 bis 3,
bei dem die relative Richtungsänderung des Aufnehmerrads (15) durch einen Richtungssensor (40) erfaßt wird, der die Information über die absolute Orientierung im Raum von Signalstationen erhält.

9. Verfahren nach einem der Ansprüche 1 bis 3,
bei dem die Informationen über die relative Richtungsänderung von einem im Raum absolut orientierten Kreiselkompaß ermittelt werden.

10. Meßeinrichtung zur Durchführung des Verfahrens nach Anspruch 1,
umfassend ein einziges Aufnehmerrad (15) mit zugeordnetem Bewegungserfassungsgerät (35) zur kontinuierlichen Ermittlung der absoluten abgefahrenen Weglänge und einem Richtungssensor (40), mit dem die absolute Richtungsänderung des Aufnehmerrades (15) kontinuierlich erfaßbar ist, wobei in Fahrtrichtung hinter dem Aufnehmerrad (15) zwei Stützelemente (12) angeordnet sind, und die Aufstandspunkte von Aufnehmerrad (15) und den beiden Stützelementen (12) eine Ebene definieren, und wobei die Meßeinrichtung einen Neigungssensor aufweist, mit dem die Neigung dieser Ebene gegenüber der Horizontalen erfaßt werden kann.

11. Meßeinrichtung nach Anspruch 10,
bei der das Bewegungserfassungsgerät, der Richtungssensor und der Neigungssensor eine Datenschnittstelle für den Anschluß an eine EDV-Anlage aufweisen.

12. Meßeinrichtung nach Anspruch 11,
bei der die EDV-Anlage (30) in die Meßeinrichtung integriert ist bzw. an der Meßeinrichtung befestigt ist.

13. Meßeinrichtung nach Anspruch 11 oder 12,
bei der er einen Monitor zur Überwachung des Meßverlaufs aufweist.

14. Meßeinrichtung nach einem der Ansprüche 10 bis 13,
bei der ein Umschalter (31) zwischen verschiedenen Betriebszuständen auswählt, der dem Anwender die Möglichkeit gibt, zwischen Darstellung und Registrierung oder nur Registrierung der abgefahrenen Konturen zu wählen.

15. Meßeinrichtung nach einem der Ansprüche 10 bis 14,
bei der die Stützelemente (12) unabhängig voneinander rollbar sind.

16. Verwendung eines Verfahrens bzw. einer Meßeinrichtung gemäß einem der Ansprüche 1 bis 15 zur Aufnahme der für die Unfallanalyse von Straßenverkehrsunfällen relevanten Daten.

## Claims

1. A method of measuring and representing to scale contours, in particular of the course of a road, wherein contours of the surfaces or lines to be measured are covered by one single measuring wheel (15) which continuously records the covered absolute travel distance and whose absolute change in direction is continuously measured by at least one direction sensor (40), wherein two supporting elements (12) are arranged in the direction of travel behind the measuring wheel (15), wherein the contact points of the measuring wheel (15) and the two supporting elements (12) define a plane whose inclination with respect to the horizontal is continuously measured by an inclination sensor, and wherein the measured data are electronically recorded.

2. The method according to claim 1,
wherein the recorded data of travel distances and changes in direction are transmitted to a computer (30) for processing.

3. The method according to claim 2,
wherein the determined contours are represented on a monitor provided on the measuring means during the measuring process.

4. The method according to one of claims 1 to 3,
wherein the rotational movement of the measuring wheel (15) is determined mechanically.

5. The method according to one of claims 1 to 3,
wherein the rotational movement of the measuring wheel (15) is determined electronically.

6. The method according to one of claims 1 to 3,
wherein the change in direction of the measuring wheel (15) is sensed by a direction sensor (40) which is orientationresponsive to electromagnetic fields.

7. The method according to one of claims 1 to 3,
wherein the absolute change in direction of the measuring wheel (15) is sensed by a direction sensor (40) which receives the information about the absolute orientation in space from an absolute direction reference system.

8. The method according to one of claims 1 to 3,
wherein the relative change in direction of the measuring wheel (15) is sensed by a direction sensor (40) which receives the information about the absolute orientation in space from signal stations.

9. The method according to one of claims 1 to 3,
wherein the information about the relative change in direction are determined by a gyrocompass which is absolutely oriented in space.

10. A measuring means for carrying out the method according to claim 1,
comprising a single measuring wheel (15) with an associated movement sensing device (35) for continuously determining the absolute covered travel distance and a direction sensor (40) which is adapted to continuously sense the absolute change in direction of the measuring wheel (15), wherein two supporting elements (12) are arranged in the direction of travel behind the measuring wheel (15) and the contact points of the measuring wheel (15) and the two supporting elements (12) define a plane, and wherein the measuring means comprises an inclination sensor which is adapted to sense the inclination of said plane with respect to the horizontal.

11. The measuring means according to claim 10,
wherein the movement sensing device, the direction sensor and the inclination sensor have a data interface for the connection to an EDP system.

12. The measuring means according to claim 11,
wherein the EDP system (30) is integrated in the measuring means or attached to the measuring means.

13. The measuring means according to claim 11 or 12, wherein it includes a monitor for monitoring the measuring process.

14. The measuring means according to one of claims 10 to 13,
wherein a change-over switch (31) chooses among various operating modes, which enables the user to choose between representation and recording or recording only of the covered contours.

15. The measuring means according to one of claims 10 to 14,
wherein the supporting elements (12) are adapted to roll independently of each other.

16. Application of a method and a measuring means, respectively, according to one of claim 1 to 15, for recording data relevant for the accident analysis of road traffic accidents.

## Revendications

1. Procédé de mesurage et de représentation à l'échelle de contours, en particulier du tracé routier, dans lequel des contours des surfaces, respectivement des lignes à mesurer sont parcourus par une roue de mesure (15) unique qui relève en continu la longueur absolue de trajet parcouru et le changement de direction absolu de celle-ci par au moins un capteur de direction (40), deux éléments d'appui (12) étant disposés dans la direction du déplacement derrière la roue de mesure (15), les points d'appui de la roue de mesure (15) et des deux éléments d'appui (12) définissant un plan dont l'inclinaison par rapport à l'horizontale est relevée en continu à l'aide d'un capteur d'inclinaison et les données mesurées étant enregistrées électroniquement.

2. Procédé selon la revendication 1,
dans lequel les données relevées concernant la longueur de trajet et les changements de direction sont transmises à un ordinateur (30) pour leur traitement.

3. Procédé selon la revendication 2,
dans lequel les contours relevés pendant le déroulement du mesurage sont affichées sur un moniteur qui se trouve sur le dispositif de mesurage.

4. Procédé selon l'une quelconque des revendications 1 à 3, dans lequel le mouvement de rotation de la roue de mesure (15) est relevé de façon mécanique.

5. Procédé selon l'une quelconque des revendications 1 à 3, dans lequel le mouvement de rotation de la roue de mesure (15) est relevé de façon électronique.

6. Procédé selon l'une quelconque des revendications 1 à 3, dans lequel le changement de direction de la roue de mesure (15) est relevé à l'aide d'un capteur de direction (40) qui s'oriente par rapport à des champs électromagnétiques.

7. Procédé selon l'une quelconque des revendications 1 à 3, dans lequel le changement de direction absolu de la roue de mesure (15) est relevé à l'aide d'un capteur de direction (40) qui reçoit l'information concernant l'orientation spatiale absolue par l'intermédiaire d'un référentiel d'orientation absolu.

8. Procédé selon l'une quelconque des revendications 1 à 3, dans lequel le changement de direction relatif de la roue de mesure (15) est relevé à l'aide d'un capteur de direction (40) qui reçoit l'information concernant l'orientation spatiale absolue de stations émettrices de signaux.

9. Procédé selon l'une quelconque des revendications 1 à 3, dans lequel l'information concernant le changement de direction relatif est relevé par un gyrocompas orienté de façon absolue dans l'espace.

10. Dispositif de mesurage pour mettre en oeuvre le procédé selon la revendication 1,
comprenant une roue de mesure (15) unique avec un dispositif de relevé de déplacement (35) associé pour le relevé en continu de la longueur absolue de trajet parcouru et un capteur de direction (40) avec lequel la variation de direction absolue de la roue de mesure (15) peut être relevée en continu, deux élément d'appui (12) étant disposés derrière la roue de mesure (15) dans la direction du déplacement et les points d'appui de la roue de mesure (15) et des deux éléments d'appui (12) définissant un plan et le dispositif de mesurage présentant un capteur d'inclinaison avec lequel on peut relever l'inclinaison de ce plan par rapport à l'horizontale.

11. Dispositif de mesurage selon la revendication 10,
dans lequel le dispositif de relevé de déplacement, le capteur de direction et le capteur d'inclinaison présentent une interface de transfert de données pour le raccordement à une installation informatique.

12. Dispositif de mesurage selon la revendication 11,
dans lequel l'installation informatique (30) est intégrée au dispositif de mesurage, respectivement est fixée au dispositif de mesurage.

13. Dispositif de mesurage selon la revendication 11 ou 12, dans lequel il présente un moniteur pour la surveillance du déroulement du mesurage.

14. Dispositif de mesurage selon l'une quelconque des revendications 10 à 13,
dans lequel un commutateur (31) qui choisit entre plusieurs modes de fonctionnement offre à l'utilisateur la possibilité de choisir entre affichage et enregistrement ou seulement enregistrement des contours parcourus.

15. Dispositif de mesurage selon l'une quelconque des revendications 10 à 14,
dans lequel on peut faire rouler les éléments d'appui (12) indépendamment l'un de l'autre.

16. Utilisation d'un procédé, respectivement d'un dispositif de mesurage selon l'une quelconque des revendications 1 à 15 pour saisir les données pertinentes pour l'analyse d'accident d'accidents de la circulation.
